# EUROPEAN PATENT APPLICATION

(11) **EP 3 613 968 A1**
(43) Date of publication of application: **26.02.2020**
(21) Application number: 19187715.8
(22) Date of filing: 23.07.2019
(51) Int. Cl.: F02C 7/04, F02K 3/06

(54) **GAS TURBINE ENGINE**

(30) Priority: 22.08.2018 GB 201813642
(71) Applicant: Rolls-Royce plc, London N1 9FX (GB)
(72) Inventor: Stretton, Richard, Derby, Derbyshire DE24 8BJ (GB); Weston, David, Derby, Derbyshire DE24 8BJ (GB); Rose, Nicholas, Derby, Derbyshire DE24 8BJ (GB)
(74) Representative: Rolls-Royce plc

(57) **Abstract**

There is disclosed a gas turbine engine for an aircraft comprising: a propulsive fan having a plurality of fan blades; a fan casing; and an air intake; wherein the air intake is mechanically coupled to the fan casing at a point having an axial position that is within a range of axial positions from a first axial position that is rearward of the leading edge of the fan blade at its radial tip by an axial component of a blade chord length, to a second axial position that is forward of the leading edge of the fan blade tip by an axial component of the blade chord length.

## Description

The present disclosure relates to a gas turbine engine, particularly the positioning of a point of mechanical coupling between a fan casing and an air intake section of a gas turbine engine.

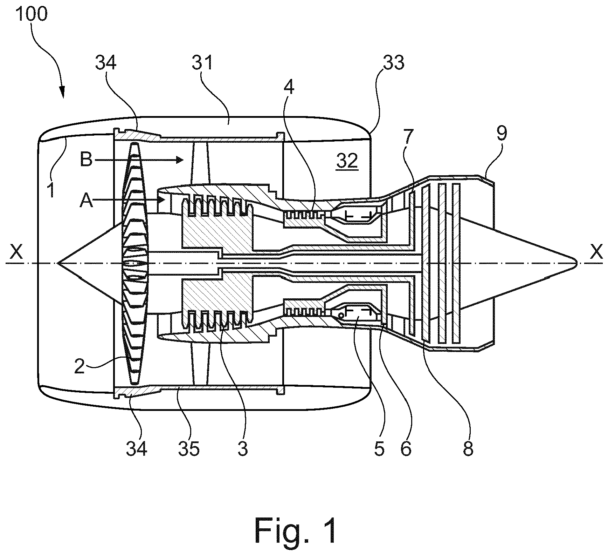

With reference to **Figure 1**, a conventional gas turbine engine generally indicated at 100 has a principal and rotational axis X-X. The engine comprises, in axial flow series, an air intake 1, a propulsive fan 2, an intermediate pressure compressor 3, a high-pressure compressor 4, combustion equipment 5, a high-pressure turbine 6, and intermediate pressure turbine 7, a low-pressure turbine 8 and a core engine exhaust nozzle 9. A nacelle 31 generally surrounds the engine 100 and defines the intake 1, a bypass duct 32 and a bypass exhaust nozzle 33.

A conventional fan 2 includes a central portion (not shown), from which a plurality of fan blades extend in a radial direction (perpendicular to the axis X-X). Each fan blade 36 comprises a fixture (e.g. a blade root) which engages a corresponding slot in the central portion (i.e. a hub or disc).

A fan casing 34 typically surrounds the fan 2, and is typically joined at its rear end to a rear casing 35 at a point known as the A3 flange, and at its front end to the air intake casing 1 at a point known as the A1 flange. The fan casing 34 and the air intake 1 are typically mechanically coupled together at the A1 flange by a joint assembly which uses nuts and bolts, wherein the shanks of the bolts are arranged to pass axially through holes in annular radially extending A1 flanges at the abutting ends of the fan casing 34 and the intake 1. A similar assembly typically joins the fan casing 34 to the rear casing 35.

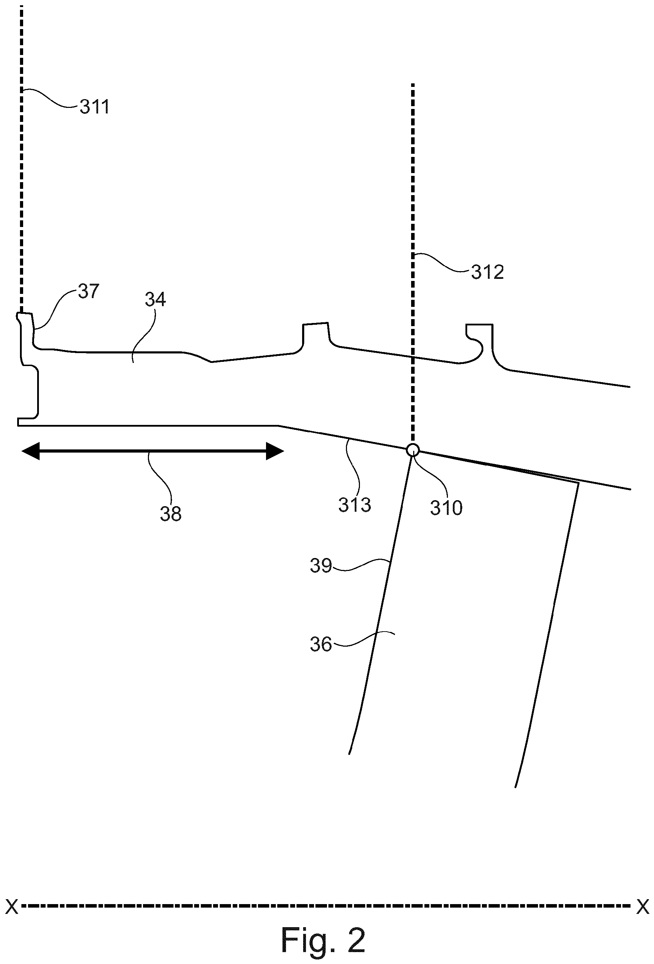

**Figure 2** is a close-up view of a typical A1 flange 37 on fan casing 34. As shown, a conventional engine 100 has a straight section 38 of fan casing 34 which is substantially parallel with the axis X-X and an angled section 313 which axially extends at an angle relative to the axis X-X. Such an arrangement defines an annular space between the fan casing 34 and the central portion of the fan 2 for aiding the removal and/or installation of individual fan blades 36 while the air intake 1 remains installed during servicing of the engine or fan 2. In particular, the straight section 38 and angled section 313 of fan casing 34 provides sufficient space for manipulating the position and orientation of the blades 36 such that their fixture (blade root) can be removed from or installed into the corresponding slot in the central portion.

While such an arrangement allows individual fan blades to be removed/installed while the air intake remains in place, it introduces additional length into the fan casing 34 and engine 100. For example, it can be seen in Figure 2 that the A1 flange 37 is at an axial position 311 that is forward of an axial position 312 of the leading edge 39 of the fan blade 36 at its radial tip 310. In particular, the A1 flange 37 is at an axial position 311 that is forward of the axial position 312 of the leading edge 39 of the fan blade tip 310 by a length that is greater than an axial component of the chord length (not shown) of the fan blade 36.

This has disadvantages in that it increases the size and weight of the nacelle 31 and intake 1, as well as that of the fan casing 2 itself. The length of fan casing 34 and intake 1 that is axially forward of the fan blade tip 310 will also present a risk of a fan blade 36 catching or striking the fan casing 34 and/or intake 1 during removal/installation, which may cause damage to the fan casing 34, intake 1 and/or fan blade 36.

Thus it is desired to improve the positioning of a point of mechanical coupling between the fan casing and air intake section of a gas turbine engine.

According to a first aspect there is provided a gas turbine engine for an aircraft comprising: a propulsive fan having a plurality of fan blades; a fan casing; and an air intake; wherein the air intake is mechanically coupled to the fan casing at a point having an axial position that is within a range of axial positions from a first axial position that is rearward of the leading edge of the fan blade at its radial tip by an axial component of a blade chord length, to a second axial position that is forward of the leading edge of the fan blade tip by an axial component of the blade chord length.

The axial component of the blade chord length may be a length of the blade chord line in a direction that is parallel to the axial direction of the gas turbine engine (in use). The blade chord length may be the (e.g. axial) length of the blade chord line at the radial tip of the fan blade.

The air intake may be mechanically coupled to the fan casing at a point having an axial position that is within a range of axial positions from an axial position at the leading edge of the fan blade at its radial tip, to the second axial position that is forward of the leading edge of the fan blade tip by an axial component of the blade chord length.

The point of mechanical coupling may be axially forward of the leading edge of the fan blade tip by 10%, 20%, 30%, 40%, 50%, 60%, 70%, 80% or 90% of the axial component of the blade chord length. Thus, the second axial position may be axially forward of the leading edge of the fan blade tip by 10%, 20%, 30%, 40%, 50%, 60%, 70%, 80% or 90% of the axial component of the blade chord length.

The point of mechanical coupling may be axially rearward of the leading edge of the fan blade tip. The point of mechanical coupling may be axially rearward of the leading edge of the fan blade tip by 10%, 20%, 30%, 40%, 50%, 60%, 70%, 80% or 90% of the axial component of the blade chord length. Thus, the first axial position may be axially rearward of the leading edge of the fan blade tip by 10%, 20%, 30%, 40%, 50%, 60%, 70%, 80% or 90% of the axial component of the blade chord length.

The point of mechanical coupling may be at the same axial position as the leading edge of the fan blade tip. Alternatively, the fan casing may be mechanically coupled to the intake at an axial position that is the same as the second axial position that is forward of the leading edge of the fan blade tip by a blade chord length. The fan casing may be mechanically coupled to the intake at an axial position that is the same as the first axial position that is rearward of the leading edge of the fan blade tip by a blade chord length.

The fan may comprise a central portion (e.g. a rotor disc or hub) and the plurality of fan blades are formed integrally with the central portion.

The fan casing may be mechanically coupled to the intake by a flange and the point of mechanical coupling is at the flange.

The flange may be or may be part of a stiffening ring. For example, the shape or dimensioning, e.g. the radial depth (or radial length) and thickness, of the flange may be chosen to stiffen the fan casing near the position of the flange. The flange may be shaped to define an I or T shape in cross-section, which may increase stiffness of the fan casing without substantially increasing the radial height of the flange.

The radial depth, thickness and/or axial position (within the range referred to above) of the flange when acting as a stiffening ring may also be chosen to control casing roundness and hence the clearance between the blade tips and the fan casing. This may be advantageous to keep the fan casing substantially round and to minimise clearance asymmetries under manoeuvre loads, thereby increasing performance.

The air intake may be arranged to remain mechanically coupled to the fan casing while the fan is removed from the gas turbine engine.

The present disclosure extends to a method of removing a propulsive fan from a gas turbine engine of any one of the statements included herein. The method may comprise releasing the mechanical coupling between the air intake and the fan casing and removing the air intake from the engine; and after removing the air intake from the engine, removing a central portion of the fan and a plurality of fan blades collectively from the fan casing.

The present disclosure also extends to a method of assembling a propulsive fan in a gas turbine engine, comprising: inserting a central portion of the fan and a plurality of fan blades collectively into a fan casing of the gas turbine engine; and thereafter: mechanically coupling an air intake to the fan casing at a point having an axial position that is within a range of axial positions from a first axial position that is rearward of the leading edge of a fan blade at its radial tip by an axial component of a blade chord length, to a second axial position that is forward of the leading edge of the fan blade tip by an axial component of the blade chord length.

The gas turbine engine of the present disclosure may comprise an engine core comprising a turbine, a combustor, a compressor, and a core shaft connecting the turbine to the compressor. Such a gas turbine engine may comprise a fan (having fan blades) located upstream of the engine core.

Arrangements of the present disclosure may be particularly, although not exclusively, beneficial for fans that are driven via a gearbox. Accordingly, the gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft, and not the second core shaft, in the example above). Alternatively, the gearbox may be arranged to be driven by any one or more shafts, for example the first and/or second shafts in the example above.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other.

Each fan blade may be defined as having a radial span extending from a central portion (root or hub) at a radially inner gas-washed location, or 0% span position, to a tip at a 100% span position. The ratio of the radius of the fan blade at the hub to the radius of the fan blade at the tip may be less than (or on the order of) any of: 0.4, 0.39, 0.38 0.37, 0.36, 0.35, 0.34, 0.33, 0.32, 0.31, 0.3, 0.29, 0.28, 0.27, 0.26, or 0.25. The ratio of the radius of the fan blade at the hub to the radius of the fan blade at the tip may be in an inclusive range bounded by any two of the values in the previous sentence (i.e. the values may form upper or lower bounds). These ratios may commonly be referred to as the hub-to-tip ratio. The radius at the hub and the radius at the tip may both be measured at the leading edge (or axially forwardmost) part of the blade. The hub-to-tip ratio refers, of course, to the gas-washed portion of the fan blade, i.e. the portion radially outside any platform.

The radius of the fan may be measured between the engine centreline and the tip of a fan blade at its leading edge. The fan diameter (which may simply be twice the radius of the fan) may be greater than (or on the order of) any of: 250 cm (around 100 inches), 260 cm, 270 cm (around 105 inches), 280 cm (around 110 inches), 290 cm (around 115 inches), 300 cm (around 120 inches), 310 cm, 320 cm (around 125 inches), 330 cm (around 130 inches), 340 cm (around 135 inches), 350cm, 360cm (around 140 inches), 370 cm (around 145 inches), 380 (around 150 inches) cm or 390 cm (around 155 inches). The fan diameter may be in an inclusive range bounded by any two of the values in the previous sentence (i.e. the values may form upper or lower bounds).

The rotational speed of the fan may vary in use. Generally, the rotational speed is lower for fans with a higher diameter. Purely by way of non-limitative example, the rotational speed of the fan at cruise conditions may be less than 2500 rpm, for example less than 2300 rpm. Purely by way of further non-limitative example, the rotational speed of the fan at cruise conditions for an engine having a fan diameter in the range of from 250 cm to 300 cm (for example 250 cm to 280 cm) may be in the range of from 1700 rpm to 2500 rpm, for example in the range of from 1800 rpm to 2300 rpm, for example in the range of from 1900 rpm to 2100 rpm. Purely by way of further non-limitative example, the rotational speed of the fan at cruise conditions for an engine having a fan diameter in the range of from 320 cm to 380 cm may be in the range of from 1200 rpm to 2000 rpm, for example in the range of from 1300 rpm to 1800 rpm, for example in the range of from 1400 rpm to 1600 rpm.

In use of the gas turbine engine, the fan (with associated fan blades) rotates about a rotational axis. This rotation results in the tip of the fan blade moving with a velocity Uₜᵢₚ. The work done by the fan blades 13 on the flow results in an enthalpy rise dH of the flow. A fan tip loading may be defined as dH/Uₜᵢₚ², where dH is the enthalpy rise (for example the 1-D average enthalpy rise) across the fan and Uₜᵢₚ is the (translational) velocity of the fan tip, for example at the leading edge of the tip (which may be defined as fan tip radius at leading edge multiplied by angular speed). The fan tip loading at cruise conditions may be greater than (or on the order of) any of: 0.25, 0.26, 0.27, 0.28, 0.29, 0.3, 0.31, 0.32, 0.33, 0.34, 0.35, 0.36, 0.37, 0.38, 0.39 or 0.4 (all units in this paragraph dimensionless). The fan tip loading may be in an inclusive range bounded by any two of the values in the previous sentence (i.e. the values may form upper or lower bounds).

Gas turbine engines in accordance with the present disclosure may have any desired bypass ratio, where the bypass ratio is defined as the ratio of the mass flow rate of the flow through the bypass duct to the mass flow rate of the flow through the core at cruise conditions. In some arrangements the bypass ratio may be greater than (or on the order of) any of the following: 10, 10.5, 11, 11.5, 12, 12.5, 13, 13.5, 14, 14.5, 15, 15.5, 16, 16.5, or 17. The bypass ratio may be in an inclusive range bounded by any two of the values in the previous sentence (i.e. the values may form upper or lower bounds). The bypass duct may be substantially annular. The bypass duct may be radially outside the core engine. The radially outer surface of the bypass duct may be defined by a nacelle and/or a fan case.

The overall pressure ratio of a gas turbine engine as described and/or claimed herein may be defined as the ratio of the stagnation pressure upstream of the fan to the stagnation pressure at the exit of the highest pressure compressor (before entry into the combustor). By way of non-limitative example, the overall pressure ratio of a gas turbine engine as described and/or claimed herein at cruise may be greater than (or on the order of) any of the following: 35, 40, 45, 50, 55, 60, 65, 70, 75. The overall pressure ratio may be in an inclusive range bounded by any two of the values in the previous sentence (i.e. the values may form upper or lower bounds).

Specific thrust of an engine may be defined as the net thrust of the engine divided by the total mass flow through the engine. At cruise conditions, the specific thrust of an engine described and/or claimed herein may be less than (or on the order of) any of the following: 110 Nkg⁻¹s, 105 Nkg⁻¹s, 100 Nkg⁻¹s, 95 Nkg⁻¹s, 90 Nkg⁻¹s, 85 Nkg⁻¹s or 80 Nkg⁻¹s. The specific thrust may be in an inclusive range bounded by any two of the values in the previous sentence (i.e. the values may form upper or lower bounds). Such engines may be particularly efficient in comparison with conventional gas turbine engines.

A gas turbine engine as described and/or claimed herein may have any desired maximum thrust. Purely by way of non-limitative example, a gas turbine as described and/or claimed herein may be capable of producing a maximum thrust of at least (or on the order of) any of the following: 160kN, 170kN, 180kN, 190kN, 200kN, 250kN, 300kN, 350kN, 400kN, 450kN, 500kN, or 550kN. The maximum thrust may be in an inclusive range bounded by any two of the values in the previous sentence (i.e. the values may form upper or lower bounds). The thrust referred to above may be the maximum net thrust at standard atmospheric conditions at sea level plus 15 deg C (ambient pressure 101.3kPa, temperature 30 deg C), with the engine static.

In use, the temperature of the flow at the entry to the high pressure turbine may be particularly high. This temperature, which may be referred to as TET, may be measured at the exit to the combustor, for example immediately upstream of the first turbine vane, which itself may be referred to as a nozzle guide vane. At cruise, the TET may be at least (or on the order of) any of the following: 1400K, 1450K, 1500K, 1550K, 1600K or 1650K. The TET at cruise may be in an inclusive range bounded by any two of the values in the previous sentence (i.e. the values may form upper or lower bounds). The maximum TET in use of the engine may be, for example, at least (or on the order of) any of the following: 1700K, 1750K, 1800K, 1850K, 1900K, 1950K or 2000K. The maximum TET may be in an inclusive range bounded by any two of the values in the previous sentence (i.e. the values may form upper or lower bounds). The maximum TET may occur, for example, at a high thrust condition, for example at a maximum take-off (MTO) condition.

A fan blade and/or aerofoil portion of a fan blade described and/or claimed herein may be manufactured from any suitable material or combination of materials. For example at least a part of the fan blade and/or aerofoil may be manufactured at least in part from a composite, for example a metal matrix composite and/or an organic matrix composite, such as carbon fibre. By way of further example at least a part of the fan blade and/or aerofoil may be manufactured at least in part from a metal, such as a titanium based metal or an aluminium based material (such as an aluminium-lithium alloy) or a steel based material. The fan blade may comprise at least two regions manufactured using different materials. For example, the fan blade may have a protective leading edge, which may be manufactured using a material that is better able to resist impact (for example from birds, ice or other material) than the rest of the blade. Such a leading edge may, for example, be manufactured using titanium or a titanium-based alloy. Thus, purely by way of example, the fan blade may have a carbon-fibre or aluminium based body (such as an aluminium lithium alloy) with a titanium leading edge. A fan as described and/or claimed herein may comprise a central portion, from which the fan blades may extend, for example in a radial direction. The fan blades may be attached to the central portion in any desired manner. For example, each fan blade may comprise a fixture which may engage a corresponding slot in the hub (or disc). Purely by way of example, such a fixture may be in the form of a dovetail that may slot into and/or engage a corresponding slot in the hub/disc in order to fix the fan blade to the hub/disc. As mentioned above, and by way of further example, the fan blades maybe formed integrally with a central portion. Such an arrangement may be referred to as a blisk or a bling. Any suitable method may be used to manufacture such a blisk or bling. For example, at least a part of the fan blades may be machined from a block and/or at least part of the fan blades may be attached to the hub/disc by welding, such as linear friction welding.

The gas turbine engines described and/or claimed herein may or may not be provided with a variable area nozzle (VAN). Such a variable area nozzle may allow the exit area of the bypass duct to be varied in use. The general principles of the present disclosure may apply to engines with or without a VAN.

The fan of a gas turbine as described and/or claimed herein may have any desired number of fan blades, for example 16, 18, 20, or 22 fan blades.

As used herein, cruise conditions may mean cruise conditions of an aircraft to which the gas turbine engine is attached. Such cruise conditions may be conventionally defined as the conditions at mid-cruise, for example the conditions experienced by the aircraft and/or engine at the midpoint (in terms of time and/or distance) between top of climb and start of decent.

Purely by way of example, the forward speed at the cruise condition may be any point in the range of from Mach 0.7 to 0.9, for example 0.75 to 0.85, for example 0.76 to 0.84, for example 0.77 to 0.83, for example 0.78 to 0.82, for example 0.79 to 0.81, for example on the order of Mach 0.8, on the order of Mach 0.85 or in the range of from 0.8 to 0.85. Any single speed within these ranges may be the cruise condition. For some aircraft, the cruise conditions may be outside these ranges, for example below Mach 0.7 or above Mach 0.9.

Purely by way of example, the cruise conditions may correspond to standard atmospheric conditions at an altitude that is in the range of from 10000m to 15000m, for example in the range of from 10000m to 12000m, for example in the range of from 10400m to 11600m (around 38000 ft), for example in the range of from 10500m to 11500m, for example in the range of from 10600m to 11400m, for example in the range of from 10700m (around 35000 ft) to 11300m, for example in the range of from 10800m to 11200m, for example in the range of from 10900m to 11100m, for example on the order of 11000m. The cruise conditions may correspond to standard atmospheric conditions at any given altitude in these ranges.

Purely by way of example, the cruise conditions may correspond to: a forward Mach number of 0.8; a pressure of 23000 Pa; and a temperature of -55 deg C.

As used anywhere herein, "cruise" or "cruise conditions" may mean the aerodynamic design point. Such an aerodynamic design point (or ADP) may correspond to the conditions (comprising, for example, one or more of the Mach Number, environmental conditions and thrust requirement) for which the fan is designed to operate. This may mean, for example, the conditions at which the fan (or gas turbine engine) is designed to have optimum efficiency.

In use, a gas turbine engine described and/or claimed herein may operate at the cruise conditions defined elsewhere herein. Such cruise conditions may be determined by the cruise conditions (for example the mid-cruise conditions) of an aircraft to which at least one (for example 2 or 4) gas turbine engine may be mounted in order to provide propulsive thrust.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

Embodiments will now be described by way of example only, with reference to the Figures, in which:
**Figure 1** is a sectional side view of a gas turbine engine according to a prior art arrangement;
**Figure 2** is a close-up view of a typical point of mechanical coupling between an air intake section and a fan casing of the gas turbine engine of Figure 1;
**Figure 3** is a sectional side view of a gas turbine engine according to the present disclosure;
**Figure 4** is a close-up view of a fan casing showing the position of a point of mechanical coupling between the fan casing and an air intake section of the gas turbine engine of Figure 3; and
**Figure 5** is a flow diagram illustrating various steps of removing the fan assembly from the gas turbine engine according to the technology described herein.

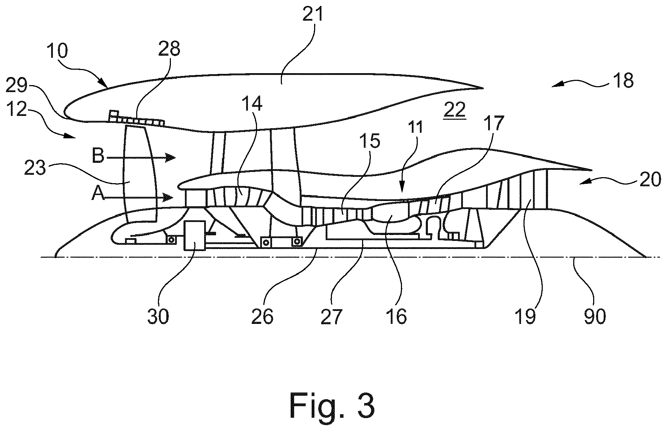

**Figure 3** illustrates a gas turbine engine 10 having a principal rotational axis 90. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

Accordingly, the present disclosure extends to a gas turbine engine having any arrangement of gearbox styles (for example star or planetary), support structures, input and output shaft arrangement, and bearing locations.

Optionally, the gearbox may drive additional and/or alternative components (e.g. the intermediate pressure compressor and/or a booster compressor).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 3 has a split flow nozzle 20, 22 meaning that the flow through the bypass duct 22 has its own nozzle that is separate to and radially outside the core engine nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area.

The geometry of the gas turbine engine 10, and components thereof, is defined by a conventional axis system, comprising an axial direction (which is aligned with the rotational axis 90), a radial direction (in the bottom-to-top direction in Figure 3), and a circumferential direction (perpendicular to the page in the Figure 3 view). The axial, radial and circumferential directions are mutually perpendicular.

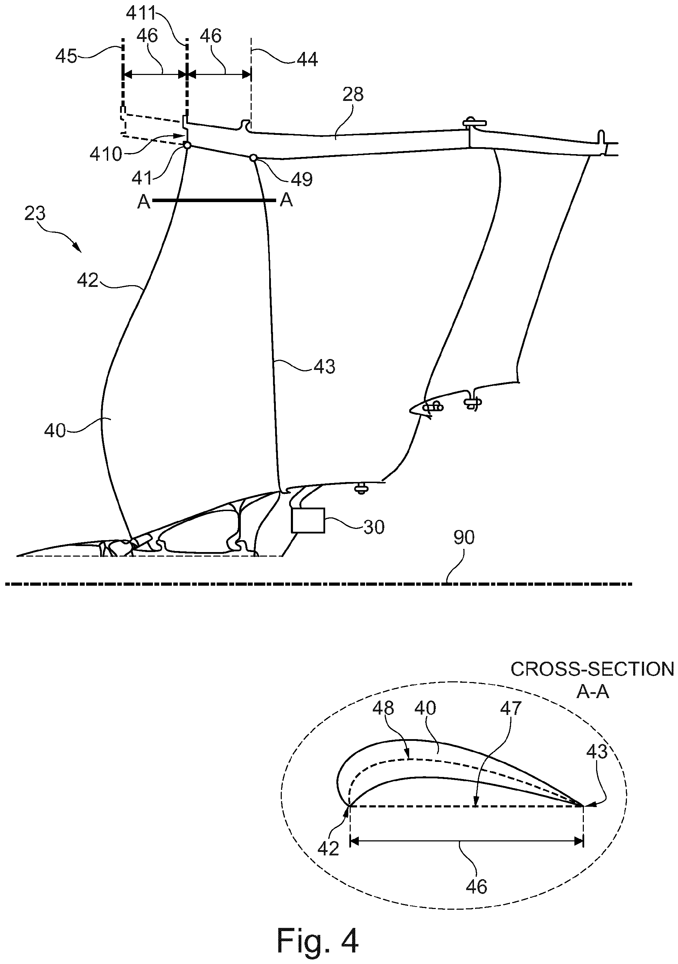

The fan 23 according to the present disclosure is similar to the fan arrangement of Figures 1 and 2 in that it is surrounded by a fan casing 28 and is mechanically coupled (joined) at its front end to an air intake casing 29 (which may be part of the nacelle 21) at a point known as the A1 flange. However, the fan 23 of the present disclosure differs from that of Figures 1 and 2 by at least the positioning of the point of mechanical coupling between the fan casing 28 and air intake 29 relative to the fan blades, as will now be described with respect to Figure 4.

**Figure 4** is a close-up view of a fan casing showing the position of a point of mechanical coupling between the fan casing and an air intake section of the gas turbine engine of Figure 3. In particular, Figure 4 schematically illustrates a cross-sectional side view of the gas turbine engine of Figure 3 which is focused on the fan section 23 and associated fan casing 28.

The fan 23 is driven to rotate about the principle rotational axis 90 and comprises a central portion (not shown) and a fan blade 40 radially extending therefrom. Although Figure 4 shows only one fan blade 40, the fan 23 may have any desired number of fan blades, for example 16, 18, 20, or 22 fan blades.

The fan blade 40 has a radial span along its leading edge (or axially forwardmost edge) 42 extending from the central portion (root or hub) at a radially inner gas-washed location, i.e. a 0% span position, to a tip 41 at a 100% span position. The fan blade 40 also has a trailing edge 43, which is its axially rearmost edge, extending from the central portion at a radially inner gas-washed location, i.e. a 0% span position, to a tip 49 at a 100% span position.

The fan blade 40 is shaped to define an aerofoil profile in radial cross-section (cross-section A-A taken along the axial direction 90). Accordingly, the size of the fan blade 40 can be defined according to its chord length 46. The chord length 46 is the length of a chord line 47 joining the leading edge 42 and the trailing edge 43 of the aerofoil section. The chord line 47 may be further defined as a straight line between two opposite sides of a (central) camber line 48 of the aerofoil section. The chord line 47 may also be defined as a straight line between two surface points having the smallest two radii, respectively. It will be appreciated that in Figure 4, the chord line 47 is parallel to the axial direction of the gas turbine engine.

As mentioned above, the fan blade 40 is surrounded by a fan casing 28 which is mechanically coupled at its axially forwardmost end to an air intake casing (not shown) at a point 410 known as the A1 flange. The flange is an annular radially outwardly extending rim, collar, or rib on the fan casing 28, suitable for abutting a correspondingly shaped end of the intake 1 and for attaching the fan casing 28 to the intake 1.

The A1 flange (the point of mechanical coupling) 410 is at an axial position that is proximate to the axial position of the fan blade 40. The point of mechanical coupling 410 may be at any suitable and desired axial position that is within a range of axial positions from a first axial position 44 that is rearward of the leading edge 42 of the fan blade 40 at its radial tip 41 by a distance that corresponds to (is equal to) the axial component of the blade chord length 46, to a second axial position 45 that is axially forward of the leading edge 42 of the fan blade tip 41 by a distance that corresponds to (is equal to) the axial component of the blade chord length 46.

The axial component of the blade chord length 46 corresponds to the length by which the blade chord line 47 extends in a direction that is parallel to the engine axis 90 from the radial tip 49 of the fan blade on its trailing edge 43. In the arrangement of Figure 4 where the blade chord line 47 is parallel to the engine axis 90, the axial component of the blade chord length 46 corresponds to (is equal to) the full length of the blade chord line 47. However, in arrangements where the fan blade is skewed such that the blade chord line 47 is arranged at a non-zero angle relative to the engine axis 90, the axial component will be less than the full length 46 of the blade chord line 47.

In this way, a fan casing 28 having a shorter length can be provided. This may reduce the size and weight of the fan casing 28 itself, as well as allowing an overall shorter and therefore lighter nacelle 21 to be used for the engine. Further, reducing the length of the fan casing 28 and nacelle 21 may reduce the risk of the fan assembly, particularly the blades of the fan assembly, from striking the fan casing 28 and/or air intake 29 when installing and/or removing the fan assembly, e.g. during servicing. This may be particularly advantageous when the fan assembly is a geared turbo fan, which is more likely to need to be removed from the fan casing for accessing the gearbox.

A further effect of having an A1 flange located at an axial position that is proximate to the axial position of the fan blade 40, is that it serves to increase the rigidity of the fan casing at that position. The shape, thickness and/or radial depth of the A1 flange may also be tailored to increase the rigidity of the fan casing. This is advantageous in that the A1 flange can also act as a stiffening ring. In this regard, it will be appreciated that a fan casing is typically provided with one or more stiffness rings at positions that are proximate to the fan blades to achieve a desired level of compliance to radial and axial loads acting on the fan casing. Considering this, the provision of an A1 flange that serves to increase the rigidity of the fan casing at locations proximate to the fan blades allows one to reduce the number of other strengthening components that would otherwise be required if the mechanical coupling was further forward of the second axial position 45. This has advantages in terms of cost and weight reduction.

The positioning of the point of mechanical coupling, e.g. the A1 flange, within the range of axial positions between the first axial position 44 and the second axial position 45 may also serve to increase the stiffness of the fan casing at locations which are typically more likely to receive an impact from a detached fan blade in the event of a fan blade failure. It may be particularly desirable for the point of mechanical coupling to be at an axial position that is axially rearward of the leading edge 42 of the fan blade 40 at its radial tip 41, for that reason. In this way, an extent of deflection of the fan casing after impact may be controlled to remain within a tolerable range and the amount of impact energy of the detached fan blade that is absorbed by the fan casing may be increased, thereby reducing the energy of subsequent impacts of the fan blade against other parts of the overall engine structure (e.g. the Outlet Guide Vanes (OGVs)) which may be less capable of taking such a strike. This could also allow the strength requirements and hence weight of other engine or nacelle structures to be reduced.

In the example of Figure 4, the point of mechanical coupling 410 is at the same axial position 411 as the leading edge 42 of the fan blade 40 at its radial tip 41. In this way, it can be said that the fan casing 28 ends at the axial position 411 of the leading edge 42 of the fan blade 40 at its radial tip 41. The point of mechanical coupling 410 is positioned radially outwards of the fan blade 40 at its radial tip 41 on the leading edge 42. This minimises the risk of damage to the fan casing 28, air intake 29 and/or fan blades 40 due to catching.

As mentioned above, an advantage of reducing the length of the fan casing 28 that is forward of the axial position 411 of the leading edge 42 of the fan blade 40 at its radial tip 41 is that it reduces the risk of the fan assembly from striking the fan casing 28 and/or air intake 29 when installing and/or removing the fan assembly during servicing. However, the Applicant has recognised that this may have further advantages for the overall fan assembly. In particular, the Applicant has recognised that moving the point of mechanical coupling rearwards towards (and in some cases beyond) the axial position 411 of the leading edge 42 of the fan blade tip 41 may enable the central portion of the fan and the plurality of fan blades 40 to be removed from the fan casing 28 collectively, i.e. as a collective unit. This would not be possible in hypothetical arrangements where the fan casing includes a straight section as described with respect to Figure 2, due to the poor manoeuvrability of the fan in tight spaces. In particular, the extended portions of the fan casing that are forward of the blade tips prevent the fan from being removed as a collective, single unit.

Although not shown in Figure 4, the fan 23 is in the form of a blisk. A blisk is a propulsive fan that comprises a single component having a central portion and a plurality of fan blades that are formed integrally with the central portion. This is in contrast to fan arrangements in which each fan blade is removably attached to the central portion, e.g. by means of a fixture which may engage a corresponding slot in the central portion (or disc). Blisks may be additive manufactured, integrally cast, machined from a solid piece of material, or made by welding individual blades to a rotor disk.

Given that a blisk has no fixtures between the fan blades and central portion, the size of the central portion can be reduced, thereby providing an additional weight reduction. This is particularly the case when compared to a removable fan blade assembly having the same fan diameter or fan blade span (and thus the same amount of airflow for a given rotational speed), but a larger central portion to engage the fixtures of the fan blades within adequate tolerance ranges. For example, a blisk can have a lower hub line and/or more blades than a conventional fan assembly where the fan blades are removably attached to the central portion.

Furthermore, using a blisk for the fan provides additional space saving in the radially central portion of the fan which can then be used more advantageously. For example, the additional space in the radially central portion of the fan may be used advantageously to house other components of the gas turbine engine, such as one or more elements (e.g. one or more support structures, input and output shaft arrangements and bearing elements) of a gearbox 30.

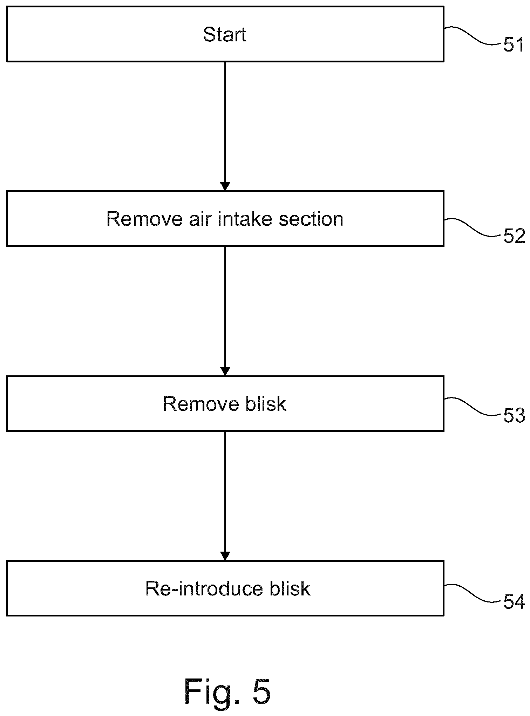

As mentioned above, the position of the mechanical coupling according to the technology described herein allows the fan assembly, particularly the central portion and the plurality of fan blades, to be removed as a collective, single unit. Removing a propulsive fan from a gas turbine engine will now be described with respect to Figure 5.

**Figure 5** is a flow diagram illustrating various steps of removing the fan assembly from the gas turbine engine according to the technology described herein. The gas turbine includes features that are similar to those of the gas turbine engine shown in Figure 3 in that it includes a fan having a plurality of fan blades, a fan casing and an air intake, wherein the fan casing is mechanically coupled to the intake at a point having an axial position that is the same as the axial position of the leading edge of the fan blade at its radial tip. In the example of Figure 5, the fan comprises a blisk formed of a single part having a central portion and a plurality of fan blades formed integrally therewith.

As shown in Figure 5, the method begins at step 51 when the gas turbine engine is fully assembled, but the fan is to be removed for servicing.

At step 52, the air intake is removed from the engine by releasing the mechanical coupling at the A1 flange between the air intake and the fan casing. This includes releasing the nuts and bolts which form the joint assembly forming the mechanical coupling, and removing the shanks of the bolts from the axial through holes in the A1 flange. Removing the air intake includes removing the air intake and any associated elements thereof (such as engine mounted Front acoustic panels or FAPs) and/or liners) collectively, i.e. without removing the panels from the intake. To facilitate this, the FAPs and/or liners may be incorporated into the intake, rather than, e.g., the fan casing.

After the air intake has been removed at step 52, there are no obstructions forward of the position of the fan blades in use that would otherwise pose a risk of catching the fan blades during their removal from the gas turbine engine. Therefore, the method proceeds to step 53 at which point the blisk (the central portion and plurality of fan blades) is released from any central linkages or spools and removed from the fan casing as a collective unit.

After the blisk has been removed from the engine, it may be serviced and then re-assembled into the engine as illustrated by step 54. Alternatively, a new blisk may be installed to replace the blisk that has been removed. In either case, step 54 includes inserting a central portion of the fan and a plurality of fan blades collectively (e.g. as a blisk) into a fan casing of the gas turbine engine, and thereafter mechanically coupling an air intake section to the fan casing at a point having an axial position that is within a range of axial positions from a first axial position that is rearward of the leading edge of a fan blade at its radial tip by an axial component of a blade chord length, to a second axial position that is forward of the leading edge of the fan blade tip by an axial component of the blade chord length.

By removing the central portion and the plurality of fans collectively, the overall time taken to remove the fan assembly from the engine is reduced compared to hypothetical arrangements in which the fan blades are individually removed from the central portion. Further, removing the air intake as a collective unit provides further time savings in that it saves one from having to remove any Front Acoustic Panels or liners, i.e. noise reducing elements attached to the radially inner edge of the air intake section, from the intake to allow individual blades to be removed. This is compared to hypothetical arrangements where Front Acoustic Panels or liners may need to be removed to allow the individual blades to be removed from a conventional engine.

From the above it can be seen that the technology described herein provides a gas turbine engine that has advantages in terms of size, weight and cost reduction, as well as a quicker method of removing a propulsive fan from a gas turbine engine.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein.

## Claims

1. A gas turbine engine (10) for an aircraft comprising:
a propulsive fan (23) having a plurality of fan blades (40);
a fan casing (28); and
an air intake (29);
wherein the air intake (29) is mechanically coupled to the fan casing (28) at a point (410) having an axial position that is within a range of axial positions from a first axial position (44) that is rearward of the leading edge (42) of the fan blade (40) at its radial tip (41) by an axial component of a blade chord length (46), to a second axial position (45) that is forward of the leading edge (42) of the fan blade tip (41) by an axial component of the blade chord length (46).

2. A gas turbine engine as claimed in claim 1, wherein the point of mechanical coupling is axially forward of the leading edge (42) of the fan blade tip by 10%, 20%, 30%, 40%, 50%, 60%, 70%, 80% or 90% of the axial component of the blade chord length (46).

3. A gas turbine engine as claimed in claim 1, wherein the point of mechanical coupling is axially rearward of the leading edge (42) of the fan blade tip (41).

4. A gas turbine engine as claimed in claim 1, wherein the point of mechanical coupling is at the same axial position (411) as the leading edge (42) of the fan blade tip (41).

5. A gas turbine engine as claimed in any preceding claim, wherein the fan comprises a central portion and the plurality of fan blades (40) are formed integrally with the central portion.

6. A gas turbine engine as claimed in any preceding claim, wherein the fan casing (28) is mechanically coupled to the intake by a flange and the point of mechanical coupling is at the flange.

7. A gas turbine engine as claimed in claim 6, wherein the flange is or is part of a stiffening ring.

8. A gas turbine engine as claimed in claim 7, wherein the flange is shaped to define an I or T shape in cross-section.

9. A gas turbine engine as claimed in any preceding claim, wherein the air intake (29) is arranged to remain mechanically coupled to the fan casing (28) while the fan is removed from the gas turbine engine.

10. A gas turbine engine (10) as claimed in any preceding claim, further comprising:
an engine core (11) downstream of the fan (23), wherein the engine core (11) comprises a turbine (19), a compressor (14), and a core shaft (26) connecting the turbine to the compressor; and
a gearbox (30) that receives an input from the core shaft (26) and outputs drive to the fan so as to drive the fan at a lower rotational speed than the core shaft.

11. A gas turbine engine according to claim 10, wherein:
the turbine is a first turbine (19), the compressor is a first compressor (14), and the core shaft is a first core shaft (26);
the engine core further comprises a second turbine (17), a second compressor (15), and a second core shaft (27) connecting the second turbine to the second compressor; and
the second turbine, second compressor, and second core shaft are arranged to rotate at a higher rotational speed than the first core shaft.

12. A method of removing a propulsive fan from the gas turbine engine of any preceding claim, comprising:
releasing the mechanical coupling between the air intake (29) and the fan casing (28) and removing the air intake (29) from the engine; and
after removing the air intake (29) from the engine, removing a central portion of the fan and a plurality of fan blades (40) collectively from the fan casing (28).

13. A method of assembling a propulsive fan in a gas turbine engine, comprising:
inserting a central portion of the fan and a plurality of fan blades (40) collectively into a fan casing (28) of the gas turbine engine; and thereafter:
mechanically coupling an air intake (29) to the fan casing (28) at a point having an axial position that is within a range of axial positions from a first axial position (44) that is rearward of the leading edge (42) of a fan blade at its radial tip by an axial component of a blade chord length (46), to a second axial position (45) that is forward of the leading edge (42) of the fan blade tip by an axial component of the blade chord length (46).
